# FASCICULE DE BREVET EUROPEEN

(11) **EP 0 440 083 B1**
(45) Date de publication et mention de la délivrance du brevet: **16.02.1994**
(21) Numéro de dépôt: 91100814.2
(22) Date de dépôt: 23.01.1991
(51) Int. Cl.: B60C 23/00, B60C 19/00, B66F 9/075

(54) **Dispositif de régulation de la raideur d'un pneumatique et véhicule équipé d'un tel dispositif**
Vorrichtung zur Regulierung der Starrheit eines Reifens und Fahrzeug ausgerüstet mit solch einer Vorrichtung
Apparatus for regulation of the stiffness of a tyre and vehicle provided with such an apparatus

(30) Priorité: 02.02.1990 FR 9001321
(43) Date de publication de la demande: 07.08.1991
(73) Titulaire: COMPAGNIE GENERALE DES ETABLISSEMENTS MICHELIN - MICHELIN & CIE, 63040 Clermont-Ferrand Cédex (FR)
(72) Inventeur: Lambert, Guy-Noel, F-63100 Clermont-Ferrand (FR)
(74) Mandataire: Bauvir, Jacques

(56) Documents cités:
- FR-A- 1 180 870
- FR-A- 2 503 121
- GB-A- 680 108
- GB-A- 713 952
- US-A- 3 033 261

## Description

La présente invention concerne le contrôle de la raideur d'un pneumatique, et est utilisable en particulier avec les pneumatiques montés sur les chariots élévateurs à fourches, encore appelés engins de manutention, ou sur les chargeuses utilisées en génie civil.

L'adaptation des pneumatiques aux chariots élévateurs à fourches a été couronnée de succès. Cependant, elle pose encore quelques problèmes non résolus à ce jour. Ces problèmes sont essentiellement dus à une stabilité parfois insuffisante du chariot équipé de pneumatiques lorsque les fourches sont en position très élévée, levant la charge jusqu'à plusieurs mètres de hauteur.

Dans cette configuration, la souplesse des pneumatiques, conjuguée avec la distance verticale à laquelle la charge est soulevée, transforme chaque mouvement du chariot en une série d'oscillations avant arrière ou gauche droite parfois dangereuses car il peut y avoir un risque de basculement du chariot. A tout le moins, ces oscillations sont extrêmement gênantes pour les manoeuvres de positionnement de la charge.

Ces mouvements peuvent bien sûr être limités si le chariot est commandé sans brusquerie. Mais alors c'est le rendement global qui risque d'en pâtir, et en outre, ces chariots ne comportent pas toujours des commandes suffisamment progressives pour pouvoir limiter les oscillations indésirables.

Le problème à la base de l'invention consiste à chercher à concilier les avantages que possède le pneumatique du point de vue de son prix, de la résistance à l'avancement, de la durée de vie, de la filtration des vibrations en roulage, de l'adhérence, avec les avantages spécifiques du bandage plein, quant à la stabilité du chariot de manutention lorsqu'il soulève une charge à grande hauteur.

Il est déjà connu d'accroître la raideur des pneumatiques utilisés pour les applications de manutention, soit en les remplissant de polyuréthane, soit en utilisant des chambres à air renforcées.

Toutes ces solutions reviennent pratiquement à transformer le pneumatique pour le faire se rapprocher du bandage plein, et on perd une bonne partie de ses avantages propres.
Dans un pneumatique classique, lorsque la flèche augmente, la pression du pneumatique reste sensiblement constante.
Donc une augmentation de la charge supportée provoque nécessairement un accroissement de la surface de contact. Une augmentation significative de la charge supportée, due par exemple à un transfert de charge, ne peut que provoquer un accroissement important de la flèche. La raideur d'un pneumatique classique est donc très faible et c'est ce qui lui permet d'assurer un bon confort d'utilisation.

Un dispositif qui maintient la pression d'un pneumatique constante et, en même temps, augmente la raideur latérale, est décrit par exemple dans US-A-3 033 261.

Vouloir augmenter la raideur verticale d'un pneumatique revient donc à faire en sorte que le surcroît de charge désiré soit obtenu avec une variation de flèche beaucoup plus faible. C'est ainsi que l'invention propose un moyen de faire croître la pression du pneumatique avec l'écrasement beaucoup plus vite que pour les pneumatiques classiques.

Selon l'invention, le dispositif de régulation de la raideur d'un pneumatique monté sur une roue comportant une jante, le pneumatique et la jante définissant le volume interne du pneumatique, le volume interne étant rempli en totalité ou quasi totalité par un fluide incompressible, ce dispositif comportant au moins un bloc hydropneumatique comportant, de part et d'autre d'une membrane de séparation, une capacité remplie d'un gaz de pressurisation, et une enceinte remplie du même fluide incompressible, des canalisations remplies du même fluide incompressible connectant ledit volume interne au bloc hydropneumatique, est caractérisé en ce qu'il comporte une vanne de connexion capable de basculer d'une position de fermeture isolant ledit volume interne de ladite enceinte, à une position d'ouverture, et en ce qu'il comporte des moyens de commande de la vanne de connexion.

Il est notamment proposé d'équiper les chariots élévateurs à fourches, permettant de gerber en hauteur, d'un dispositif de régulation de la raideur comme décrit ci-dessus au moins sur chacune des roues de l'essieu le plus proche des fourches afin de maîtriser le roulis de l'engin de manutention.

Pour parvenir à une raideur très élevée, on remplit l'intérieur d'un pneumatique par un fluide incompressible. Il peut s'agir par exemple d'eau ou bien de glycol s'il est nécessaire d'atteindre une température de congélation très basse. Lorsqu'un pneumatique est écrasé, son volume se réduit très légèrement par rapport au volume initial. Cela se traduit, en cas de gonflage à l'air, par une légère augmentation de la pression interne, de quelques dizaines ou centaines de millibars suivant les conditions initiales. A titre d'exemple, si l'on considère un pneumatique 225/75 R 10 XZM sans charge, gonflé à l'air à 10 bars, sa pression devient 10,380 bars lorsqu'il supporte une charge de 4475 kg. La variation de volume interne correspondant à cette variation de pression et de 1,06 litre, soit 3,3 %. Si maintenant nous remplissons le pneumatique d'un liquide incompressible comme l'eau, cette cette variation de volume ne pourra pas être absorbée par le fluide interne. Les armatures du pneumatique vont devoir s'allonger pour que le pneumatique reste à volume constant. Les tensions dans les armatures vont augmenter fortement et par conséquent, la pression interne du fluide augmente fortement par équilibre des forces internes au pneumatique.

La charge va donc varier très vite pour un faible supplément d'écrasement, ce qui est la caractéristique d'une raideur très élevée.

Si ce mode d'utilisation du pneumatique permet de résoudre les problèmes de stabilité posés par les engins de manutention, il fait bien entendu perdre les avantages du pneumatique, notamment en matière de confort et de résistance à l'avancement. Il a été constaté expérimentalement que le pneumatique ne devenait vraiment raide qu'à condition de le remplir intégralement d'eau. Par contre, dès qu'il susbsiste un peu d'air à l'intérieur du volume interne, on s'approche très rapidement d'une raideur radiale très proche de celle d'un pneumatique gonflé à l'air seulement.

L'invention permet donc d'obtenir une raideur variable en utilisant un pneumatique intégralement rempli d'eau ou de tout fluide incompressible, et en la mettant en communication à la demande avec un volume d'air suffisant pour lui rendre une raideur faible comparable à celle d'un pneumatique gonflé totalement à l'air. Les moyens de commande de la vanne de connexion peuvent nécessiter une intervention du pilote de l'engin équipé, ou être automatisés.

Les figures suivantes permettent de bien comprendre l'invention et d'en saisir tous les avantages.

Les figures 1 et 2 schématisent la réalisation de l'invention.
Les figures 3 et 4 illustrent l'application de l'invention à un engin de manutention.

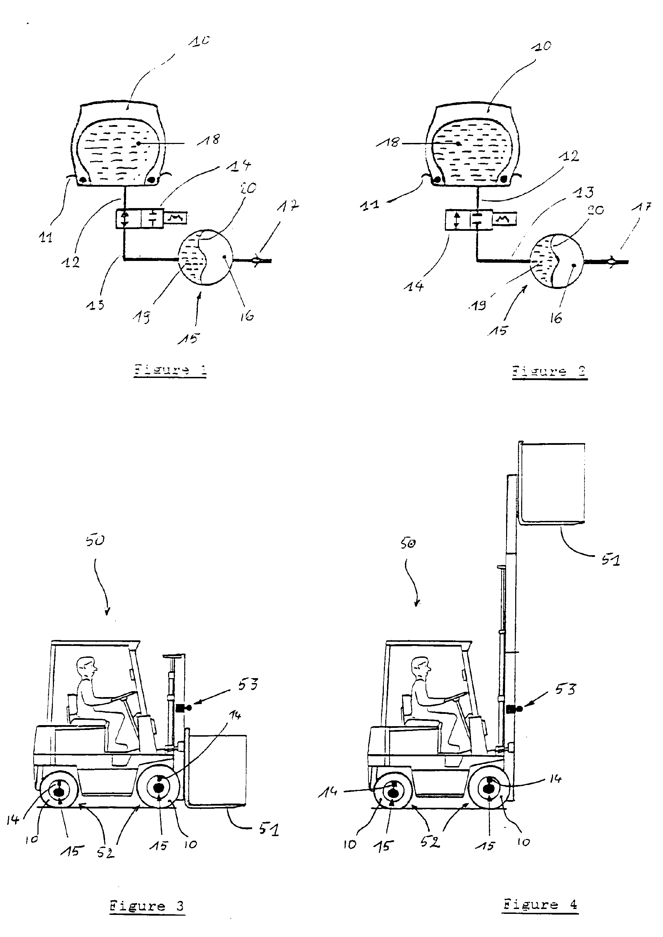

Aux figures 1 et 2, on aperçoit un pneumatique 10 monté sur une jante 11 de roue, des canalisations 12 et 13, une vanne de connexion 14 ainsi qu'un bloc hydropneumatique 15 comportant une capacité 16 remplie de gaz de pressurisation comme de l'air ou de l'azote. On voit également une soupape 17 permettant l'introduction du gaz de pressurisation dans la capacité 16. Un fluide incompressible remplit totalement le volume interne 18 du pneumatique, les canalisations 12 et 13 et l'enceinte 19 du bloc hydropneumatique, séparée de la capacité 16 par une membrane 20.

Selon les applications de l'invention envisagée, on peut bien sûr laisser subsister un peu d'air à l'intérieur du volume interne du pneumatique. Il est également possible de connecter le volume interne du pneumatique graduellement à plusieurs blocs hydropneumatiques en fonction de l'évolution de raideur recherché. Toutes ces adaptations sont une affaire de simple dimensionnement en fonction de l'application souhaitée. Il est par exemple possible d'avoir plusieurs blocs hydropneumatiques à capacité de gaz de pressurisation identiques et d'augmenter le nombre de ces blocs hydropneumatiques en contact avec le volume interne du pneumatique pour diminuer la raideur.

Pour l'application aux engins de manutention, le fluide incompressible remplit de préférence totalement le volume interne du pneumatique et il suffit de prévoir un seul bloc hydropneumatique, une vanne de connexion basculant entre une position de fermeture et une position assurant le contact entre bloc hydropneumatique et le volume interne du pneumatique. De préférence la vanne de connexion et le bloc hydropneumatique sont solidaires de la roue. Il est possible d'installer une commande électromagnétique de la vanne de connexion. Dans ce cas, on évite l'installation de joints tournants disposés entre le volume interne du pneumatique et le bloc hydraulique. On évite également de disposer des joints tournants dans la voie de commande de la vanne de connexion. De manière fort avantageuse, le bloc hydropneumatique est réalisé dans une cavité faisant partie intégrante de la roue, par exemple aménagée entre deux disques de roue. En variante, le bloc hydropneumatique peut être réalisé dans un élément disposé à l'intérieur de la cavité pneumatique 10, la structure dudit élément étant telle que le bloc hydropneumatique ne subit pas l'influence de la pression de gonflage interne du pneumatique. Cet élément peut être un flap, un dispositif de blocage des bourrelets, ou un appui central rapporté sur la jante.

A la figure 3, on aperçoit un engin de manutention 50 équipé de fourches 51 permettant de gerber en hauteur. Le mouvement des fourches 51, surtout lorsqu'elles supportent une très lourde charge, risque de déstabiliser le chariot puisqu'elles constituent une partie susceptible d'être déplacée de façon importante par rapport au reste de l'engin. Cet engin comporte donc un dispositif de régulation de la raideur d'un pneumatique sur toutes les roues 52, pour un bon contrôle du roulis et du tangage. Le roulis étant le phénomène le plus indésirable, il peut être suffisant d'installer un dispositif de régulation sur chacune des roues avant (les plus proches des fourches) pour le maîtriser. Afin d'assurer un passage automatique sur le mode le plus raide, la vanne de connexion 14 est pourvue d'une commande par un signal électromagnétique établi par un interrupteur 53. Cet interrupteur 53 est actionné par le mouvement des fourches 51, de telle sorte que le dispositif isole le volume interne du pneumatique 10 lorsque les fourches 51 dépassent une hauteur déterminée. Ainsi, chaque fois que la souplesse importante des pneumatiques 10 risque de gêner la manoeuvre de gerbage ou même risque de devenir un facteur d'accident (situation illustrée par la figure 4), l'engin de manutention 50 passe automatiquement sur un mode de fonctionnement des pneumatiques 10 tout à fait semblable à ce que l'on obtient avec des bandages pleins. Lorsque les fourches 51 sont abaissées en cours de déplacement de l'engin de manutention 50 (situation illustrée par la figure 3), on retrouve automatiquement le confort maximum procuré par des pneumatiques 10 gonflés à l'air.

Cette invention permet donc de résoudre les problèmes spécifiquement posés par l'utilisation des pneumatiques sur des engins de manutention à fourches. La portée de l'invention n'est nullement limitée à l'exemple de réalisation décrit ; elle peut trouver utilisation à d'autres types de véhicule, chaque fois que l'on souhaite faire varier la raideur des pneumatiques pour quelque raison que ce soit.

C'est ainsi que ce qui a été dit auparavant peut s'appliquer aux chargeuses Génie Civil sur pneumatiques. Dans ce cas aussi, des oscillations importantes peuvent survenir, godet chargé et en position haute, au moment où la chargeuse est à proximité du camion. Si la sécurité peut parfois être mise en danger, comme dans le cas des chariots élévateurs, ces oscillations peuvent aussi causer des problèmes de précisions de déversement du contenu du godet, au moment où celui-ci bascule. Le matériel lui-même peut aussi souffrir de contacts brutaux entre la chargeuse et le camion.

Plus généralement, on peut installer un dispositif de ce genre sur tous les véhicules susceptibles de se trouver dans une situation similaire, c'est-à-dire tous les véhicules dont une partie peut être déplacée, mise en saillie, par rapport au reste du véhicule.

Pour la commande automatique de la vanne de connexion, on peut prévoir, en règle générale, un système sensible à l'état de fonctionnement du véhicule : on peut prévoir que la vanne de connexion soit actionnée via un microprocesseur programmé de façon adéquate, recevant les signaux de différents types de capteurs seuls ou combinés : accélération longitudinale ou transversale, vitesse du véhicule, commande de levée des fourches du godet, pression dans les vérins de commande de la partie du véhicule déplaçable.

## Revendications

1. Dispositif de régulation de la raideur d'un pneumatique (10) monté sur une roue comportant une jante (11), le pneumatique (10) et la jante (11) définissant le volume interne (18) du pneumatique, le volume interne (18) étant rempli en totalité ou quasi totalité par un fluide incompressible, ledit dispositif comportant au moins un bloc hydropneumatique (15) comportant, de part et d'autre d'une membrane de séparation (20), une capacité (16) remplie d'un gaz de pressurisation, et une enceinte (19) remplie du même fluide incompressible, des canalisations (12, 13) remplies du même fluide incompressible connectant ledit volume interne (18) au bloc hydropneumatique (15), caractérisé en ce qu'il comporte une vanne de connexion (14) capable de basculer d'une position de fermeture isolant ledit volume interne (18) de ladite enceinte (19), à une position d'ouverture, et en ce qu'il comporte des moyens de commande de la vanne de connexion.

2. Dispositif selon la revendication 1, caractérisé en ce que la vanne de connexion (14) et le bloc hydropneumatique (15) sont solidaires de la roue (52).

3. Dispositif selon l'une des revendication 1 ou 2, caractérisé en ce que le fluide incompressible remplit totalement le volume interne (18) du pneumatique (10) et en ce qu'il comporte un seul bloc hydropneumatique (15) et une vanne de connexion (14).

4. Dispositif selon la revendication 2 et 3, caractérisé en ce que le bloc hydropneumatique (15) est réalisé dans une cavité faisant partie intégrante de la roue.

5. Dispositif selon les revendications 2 et 3, caractérisé en ce que le bloc hydropneumatique (15) est réalisé dans un élément disposé à l'intérieur de la cavité pneumatique (10), la structure dudit élément étant telle que le bloc hydropneumatique ne subit pas l'influence de la pression de gonflage interne du pneumatique.

6. Véhicule sur pneumatiques (10), dont une partie est susceptible d'être déplacée par rapport au reste du véhicule, caractérisé en ce qu'il comporte un dispositif (14 + 15) selon l'une des revendications 1 à 5 au moins sur chacune des roues (52) d'un essieu.

7. Véhicule selon la revendication 6, caractérisé en ce que la vanne de connexion (14) est commandée par un système sensible à l'état de fonctionnement du véhicule.

8. Véhicule selon l'une des revendications 6 ou 7, caractérisé en ce qu'il s'agit d'un engin de manutention (50) équipé de fourches (51) permettant de gerber en hauteur, constituant la partie susceptible d'être déplacée, comportant un dispositif selon la revendication 3 ou 4, au moins sur chacune des roues de l'essieu le plus proche des fourches.

9. Véhicule selon les revendications 7 et 8, caractérisé en ce que la vanne de connexion (19) est pourvue d'une commande par un signal électromagnétique établi par un interrupteur (53), et en ce que l'interrupteur (53) est actionné par le mouvement des fourches (51), de sorte que le dispositif isole le volume interne (18) du pneumatique, passant ainsi à la position la plus raide, lorsque les fourches (51) dépassent une hauteur déterminée.

10. Véhicule selon la revendication 7, caractérisé en ce qu'il s'agit d'une chargeuse Génie Civil.

## Patentansprüche

1. Vorrichtung zum Einstellen der Starrheit eines Reifens (10), der auf einem Rad mit einer Felge (11) aufgebracht ist, wobei der Reifen (10) und die Felge (11) das innere Volumen (18) des Reifens definieren, wobei das innere Volumen (18) vollständig oder fast vollständig durch ein inkompressibles Fluid gefüllt ist, wobei die Vorrichtung wenigstens einen hydropneumatischen Block (15) aufweist, der beiderseits einer Trennmembrane (20) einen Rauminhalt (16) aufweist, der mit einem Druckausgleichsgas gefüllt ist, und eine Hülle (19) aufweist, die mit demselben inkompressiblen Fluid gefüllt ist, Leitungen (12, 13) aufweist, die mit demselben inkompressiblen Fluid gefüllt sind, die das innere Volumen (18) mit dem hydropneumatischen Block (15) verbinden, dadurch gekennzeichnet, daß ein Verbindungsventil (14), das in der Lage ist, von einer Schließstellung, die das innere Volumen (18) von der Hülle (19) abtrennt, in eine Öffnungsstellung zu schwingen, und daß sie Steuereinrichtungen des Verbindungsventils aufweist.

2. Vorrichtung nach Anspruch 1, dadurch gekennzeichnet, daß das Verbindungsventil (14) und der hydropneumatische Block (15) mit dem Rad (52) verbunden sind.

3. Vorrichtung nach einem der Ansprüche 1 oder 2, dadurch gekennzeichnet, daß das inkompressible Fluid vollständig das innere Volumen (18) des Reifens (10) füllt, und daß sie einen einzigen hydropneumatischen Block (15) und ein Verbindungsventil (14) aufweist.

4. Vorrichtung nach Anspruch 2 und 3, dadurch gekennzeichnet, daß der hydropneumatischen Block (15) in einer Vertiefung ausgebildet ist, die integraler Bestandteil des Rades ist.

5. Vorrichtung nach Anspruch 2 und 3, dadurch gekennzeichnet, daß der hydropneumatische Block (15) in einem Element ausgebildet ist, das im Inneren des Reifenhohlraums (10) angeordnet ist, wobei die Struktur des Elements derart ist, daß der hydropneumatische Block keinem Einfluß des inneren Aufpumpdruckes des Reifens unterliegt.

6. Fahrzeug auf Reifen (10), von dem ein Teil in der Lage ist, bezüglich dem Rest des Fahrzeugs bewegt zu werden, dadurch gekennzeichnet, daß es eine Vorrichtung (14 + 15) nach einem der Ansprüche 1 bis 5 wenigstens an einem jeden der Räder (52) einer Radachse aufweist.

7. Fahrzeug nach Anspruch 6, dadurch gekennzeichnet, daß das Verbindungsventil (14) von einem System gesteuert wird, das auf die Betriebsweise des Fahrzeugs reagiert.

8. Fahrzeug nach Anspruch 6 oder 7, dadurch gekennzeichnet, daß es sich um einen Handhabungswagen (50), der mit Gabeln (51) versehen ist, die erlauben, in der Höhe zu stapeln (Gabelstapler) handelt, wobei diese das bewegbare Teil bilden, mit einer Vorrichtung nach Anspruch 3 oder 4, wenigstens an einem jeden der Räder, der den Gabeln am nächsten befindlichen Radachse.

9. Fahrzeug nach Anspruch 7 und 8, dadurch gekennzeichnet, daß das Verbindungsventil (14) mit einer mittels einem elektromagnetischen Signal beaufschlagbaren Steuerung verstehen ist, das von einem Schalter (53) geliefert wird, und daß der Schalter (43) durch die Bewegung der Gabeln (51) betätigt wird, derart, daß die Vorrichtung das innere Volumen (18) des Reifens abtrennt, wobei dieser sich so in die starrste Position bewegt, wenn die Gabeln (51) eine bestimmte Höhe übersteigen.

10. Fahrzeug nach Anspruch 7, dadurch gekennzeichnet, daß es sich um eine Hoch- und Tiefbau-Beladevorrichtung handelt.

## Claims

1. A device for regulating the stiffness of a pneumatic tire (10) mounted on a wheel having a wheel rim (11), an inner volume (18) defined by the tire (10) and wheel rim (11) being substantially filled with an incompressible fluid, said device comprising at least one hydropneumatic unit (15), said hydropneumatic unit (15) having a first chamber (16) filled with a pressurized gas, a second chamber (19) filled with the same incompressible fluid and said device comprising a partition separating said first and second chambers, ducks (12, 13) filled with the same incompressible fluid to connect said inner volume (18) to said hydropneumatic unit (18), characterized by the fact that it comprises a connection valve (14) able to swith from a state establishing to a state interrupting the communication between said inner volume (18) and said second chamber (19) and by the fact that it comprises control means for controlling operation of said connection valve.

2. A device according to claim 1, characterized by the fact that said hydropneumatic unit (15) and said connection valve (14) are mounted to the wheel.

3. A device according to one of Claims 1 or 2, characterized by the fact that it comprises a single hydropneumatic unit (15) and a single connection valve (14) switching between a close position and a position establishing the contact between the inner volume (18) and the hydropneumatic unit (15).

4. A device according to Claims 2 and 3, characterized by the fact that said hydropneumatic unit (15) is integrated into a cavity of the wheel.

5. A device according to Claims 2 and 3, characterized by the fact that said hydropneumatic unit (15) is positioned in the inner volume (10), the structure of said element being such that the hydropneuatic unit is not influenced by the inner inflation pressure of the pneumatic tire.

6. A vehicle having a plurality of wheels with pneumatic tires (10) mounted thereon, said vehicle having at least one part which is movable relative to a remainder of the vehicle, characterized by the fact that it comprises a device (14 + 15) according to one of claims 1 to 5, at least on each of the wheel (52) of an axle.

7. A vehicle according to claim 6, characterized by that fact that the connection valve (14) is controled by means sensing a functioning state of the vehicle.

8. A vehicle according to claim 6 or 7, characterized by the fact that said vehicle is a fork lift truck (50) having a lift fork (51) constituting said part movable, and comprising a device according to claims 3 and 4 mounted at least on the wheels of the axle of the truck closest to the fork.

9. A vehicle according to claims 7 and 8, characterized by the fact that the connection valve (19) is controlled by an electromagnetic signal in response to a switch sensor (53), the switch sensor (53) being actuated by the movement of the forks, so that said device disconnect said hydropneumatic unit, whereby the stiffness of the tire is increased when the forks exceeds a predetermined height.

10. A vehicle according to claim 7, characterized by the fact that said vehicle is a civil engineering loader.
